# EUROPÄISCHE PATENTANMELDUNG

(11) **EP 1 193 916 A2**
(43) Veröffentlichungstag der Anmeldung: **03.04.2002**
(21) Anmeldenummer: 01122108.2
(22) Anmeldetag: 14.09.2001
(51) Int. Cl.: H04L 12/403, H04L 29/14

(54) **Verbindungs-Redundanz für ein serielles Kommunikationssystem**

(30) Priorität: 27.09.2000 DE 10047923
(71) Anmelder: SIEMENS AKTIENGESELLSCHAFT, 80333 München (DE)
(72) Erfinder: Birk, Gunther, 91054 Erlangen (DE); Gross, Markus, 90762 Fürth (DE); Hahn, Ulrich, 90766 Fürth (DE); Jänicke, Peter, 91058 Erlangen (DE); Techkentrup, Martin, 90513 Zirndorf (DE)

(57) **Zusammenfassung**

Für serielle Kommunikationssysteme, die als Mono-Master-System in Linientopologie ausgeführt sind, wird durch die Erfindung die Toleranz gegenüber einem beliebigen Fehler durch Verwendung einer zusätzlichen Rückschlussleitung zum Master erzielt. Diese Verbindung dient im Normalbetrieb nur zu Überwachungszwecken. Sie wird erst bei einer Leitungsunterbrechung aktiviert, um die Kommunikation zu den "abgetrennten" Teilnehmern zu übernehmen. In diesem Fall existieren zwei unabhängige Linien zwischen dem Master zu den Slaves.

## Beschreibung

Die Erfindung bezieht sich auf ein Verfahren zur Erzeugung einer Verbindungs-Redundanz für ein serielles Kommunikationssystem mit einer Mastereinheit und einer Mehrzahl von Slaveeinheiten, die untereinander als Aneinanderreihung von Punkt-zu-Punkt-Verbindungen in Linientopologie verbunden sind, sowie auf ein serielles Kommunikationssystem mit einer Mastereinheit und einer Mehrzahl von Slaveeinheiten, die untereinander als Aneinanderreihung von Punkt-zu-Punkt-Verbindungen in Linientopologie verbunden sind.

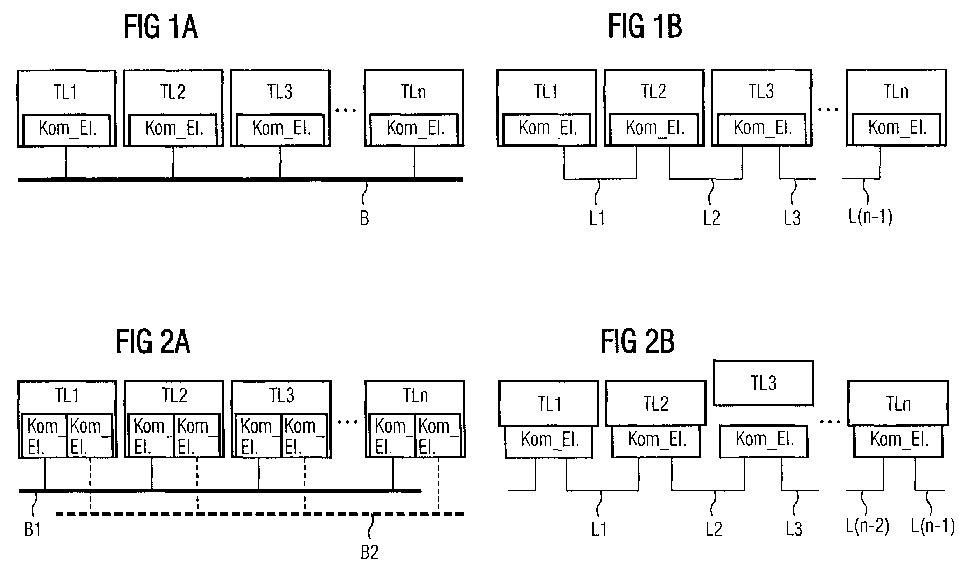

Serielle Kommunikationssysteme sind grundsätzlich empfindlich gegenüber Unterbrechungen des Übertragungsmediums, da hierdurch die Kommunikation zu den hinter der Unterbrechung liegenden Teilnehmern unmöglich wird. Dies gilt bereits für solche serielle Kommunikationssysteme, die über ein Bussystem kommunizieren. Ein solches Kommunikationssystem mit einer Mehrzahl von Kommunikationsteilnehmern TL1 bis TLn ist in der Darstellung nach FIG 1a gezeigt. Jeder dieser Kommunikationsteilnehmer TL1 bis TLn ist über einen speziellen Leitungstreiber bzw. eine Kommunikationsschnittstelle Kom_El mit dem Kommunikationsnetzwerk, hier dem Bussystem B, verbunden.

Kommt es nun zu einer Unterbrechung des Bussystems, so sind die hinter der Unterbrechung liegenden Kommunikationsteilnehmer von der Kommunikation abgeschnitten, da diese keine Daten von den vor der Unterbrechungsstelle liegenden Kommunikationsteilnehmern mehr empfangen oder an diese senden können. Lediglich wenn die Unterbrechung zwischen dem Bussystem und der Kommunikationselektronik Kom_El eines Teilnehmers liegt, dann ist nur dieser Kommunikationsteilnehmer von der Kommunikation abgeschnitten.

Die Anfälligkeit gegenüber Störungen erhöht sich jedoch drastisch, wenn die Kommunikationsstrecke nicht als Bus B, sondern als eine Aneinanderreihung von Punkt-zu-Punkt-Verbindungen in Linientopologie erfolgt. Ein solches serielles Kommunikationssystem auf Basis einer Linientopologie ist in der Darstellung nach FIG 1b gezeigt. Dabei sind die Kommunikationsteilnehmer TL1 bis TLn über jeweils zwischen den Kommunikationselektroniken Kom_El benachbarter Teilnehmer angeordnete Linienverbindungen L1 bis L(n-1) miteinander verbunden. Die Anzahl benötigter Leitungen beträgt dabei die Zahl der Kommunikationsteilnehmer abzüglich eins.

In diesem Fall stellen die zahlreichen Steckerverbindungen aber auch die in jedem Teilnehmer TL1 bis TLn erforderliche Kommunikationselektronik Kom_El eine mögliche Fehlerquelle dar. Darüber hinaus ist bei solchen Anordnungen in Form einer Aneinanderreihung von Punkt-zu-Punkt-Verbindungen in Linientopologie ein Austausch einzelner Teilnehmer TL1 bis TLn ohne Unterbrechung der Kommunikation nicht möglich.

Das Risiko einer Kommunikationsunterbrechung durch Leitungsbeschädigung oder fehlerhafte Steckverbindungen wird herkömmlicherweise durch Verwendung einer doppelten, d.h. redundanten Verkabelung deutlich minimiert. Eine solche Vorgehensweise nach dem Stand der Technik ist in der Darstellung nach FIG 2a gezeigt. Dort ist neben einem ersten Bussystem B1 ein zweites Bussystem B2 vorgesehen, das ebenfalls mit allen Kommunikationsteilnehmern verbunden ist. Ein zusätzlicher Aufwand besteht dabei darin, dass für jeden Kommunikationsteilnehmer zwei getrennte Kommunikationselektroniken Kom_El benötigt werden, eine für jedes Bussystem B1 und B2.

Ein weiteres Problem besteht darin, dass bei verketteten Punkt-zu-Punkt-Verbindungen (Linientopologie) ein Austausch einzelner Teilnehmer nur dann möglich ist, wenn die Kommunikationselektronik unabhängig von den Teilnehmern, d. h. mechanisch abtrennbar und mit separater Stromversorgung z. B. über das "Buskabel" ausgestattet ist. Diese Problematik einer Leitungsunterbrechung durch Austausch eines Kommunikationsteilnehmers und die vorangehend dargestellte herkömmliche Lösungsmöglichkeit ist in der Darstellung nach FIG 2b veranschaulicht. Das Problem der Störanfälligkeit allgemein wird damit jedoch in keiner Weise beseitigt.

Dieses Problem stellt sich insbesondere auch für ein Mono-Master-Kommunikationssystem mit verketteten Punkt-zu-Punkt-Verbindungen (Linientopologie), bei dem die Kommunikationsteilnehmer eine Mastereinheit und eine Mehrzahl von Slaveeinheiten umfassen.

Aufgabe der vorliegenden Erfindung ist es daher, eine Möglichkeit zu finden, in einem seriellen Kommunikationssystem mit verketteten Punkt-zu-Punkt-Verbindungen auch bei Auftreten einer Leitungsunterbrechung eine sichere Kommunikation ohne doppelte Verkabelung zwischen allen Kommunikationsteilnehmern zu gewährleisten.

Gemäß der vorliegenden Erfindung wird diese Aufgabe durch ein serielles Kommunikationssystem mit einer Mastereinheit und einer Mehrzahl von Slaveeinheiten gelöst, die untereinander als Aneinanderreihung von Punkt-zu-Punkt-Verbindungen in Linientopologie verbunden sind, indem eine zusätzliche Verbindung zwischen den beiden Linien-Endteilnehmern vorgesehen ist, insbesondere von der in der Linie am weitesten von der Mastereinheit entfernten Slaveeinheit zur Mastereinheit, die bei einer Leitungsunterbrechung in der Linientopologie der Übernahme der Kommunikation zu den abgetrennten Slaveeinheiten dient.

Dabei hat es sich als günstig erwiesen, wenn die zusätzliche Verbindung erst im Fall einer Leitungsunterbrechung in der Linientopologie aktivierbar ist.

Darüber hinaus kann die zusätzliche Verbindung im Normalbetrieb zu Überwachungszwecken dienen.

Dabei hat es sich als günstig erwiesen, dass ein Mittel zur Detektion einer Leitungsunterbrechung, insbesondere auch einer sporadischen Unterbrechung, in der Linientopologie vorgesehen ist, durch das die Kommunikation zwischen der Mastereinheit und den abgetrennten Slaveeinheiten über die zusätzliche Verbindung zur Mastereinheit aktivierbar ist. Besonders vorteilhaft ist das Mittel zur Detektion in der Mastereinheit angeordnet.

Wenn ein synchroner Datentransfer auf der Kommunikationslinie durch im Übertragungszyklus ausgetauschte zyklische Telegramme erfolgt, so hat es sich als günstig herausgestellt, wenn jede Slaveeinheit für jede Datenrichtung über einen Zähler zur Ermittlung der im letzten Übertragungszyklus durchgeleiteten gültigen Telegramme verfügt, wobei ein jeweiliger Zählerstand einer Slaveeinheit von dieser als Bestandteil eines pro Übertragungszyklus zur Mastereinheit geschickten Telegramms der Mastereinheit mitteilbar ist, in der anhand der Zählerstände aller Slaveeinheiten eine Leitungsunterbrechung lokalisierbar ist.

Um eine Erkennung eines Ausfalls einer Anzahl von der Mastereinheit an die Slaveeinheiten geschickter zyklischer Telegramme aufgrund einer Leitungsunterbrechung zu erreichen, ist es günstig, wenn in der Mastereinheit die Leitungsunterbrechung anhand der von den aus Sicht der Mastereinheit in der Linientopologie hinter der gestörten Stelle liegenden Slaveeinheiten gemeldeten Zählerstände lokalisierbar ist.

Soll eine Erkennung eines Ausfalls einer Anzahl zyklischer Telegramme, die von den Slaveeinheiten an die Mastereinheit geschickt wurden, aufgrund einer Leitungsunterbrechung erreicht werden, so empfiehlt es sich erfindungsgemäß, in der Mastereinheit die Leitungsunterbrechung anhand der von den aus Sicht der Mastereinheit in der Linientopologie vor der gestörten Stelle liegenden Slaveeinheiten gemeldeten Zählerstände zu lokalisieren.

Nach einer weiteren vorteilhaften Ausgestaltung der Erfindung ist das Mittel zur Detektion in der Mastereinheit als ein geeignet programmierter Mikroprozessor ausgeprägt.

Darüber hinaus wird die voranstehende Aufgabe auch durch ein Verfahren zur Erzeugung einer Verbindungs-Redundanz für ein serielles Kommunikationssystem mit einer Mastereinheit und einer Mehrzahl von Slaveeinheiten, die untereinander als Aneinanderreihung von Punkt-zu-Punkt-Verbindungen in Linientopologie verbunden sind, durch folgende Verfahrensschritte gelöst:
- Herstellen einer zusätzlichen Verbindung zwischen den beiden Linien-Endteilnehmern, insbesondere von der in der Linie am weitesten von der Mastereinheit entfernten Slaveeinheit zur Mastereinheit, zur
- Übernahme der Kommunikation zu den abgetrennten Slaveeinheiten bei einer Leitungsunterbrechung in der Linientopologie.

Nach einer vorteilhaften Ausgestaltung haben sich folgende weitere Verfahrensschritte als günstig erwiesen:
- Aktivieren der Kommunikation zu den abgetrennten Slaveeinheiten über die zusätzliche Verbindung im Fall einer Leitungsunterbrechung in der Linientopologie und
- Informieren der abgetrennten Slaveeinheiten über die zusätzliche Verbindung, dass die Mastereinheit nur über die zusätzliche Verbindung erreichbar ist.

Für den Fall, dass eine intermittierende Leistungsunterbrechung auftritt, empfehlen sich erfindungsgemäß folgende weitere Verfahrensschritte:
- Lokalisieren der Unterbrechungsstelle,
- Herstellen einer dauerhaften Unterbrechung durch Mitteilung an die letzte Slaveeinheit vor der Unterbrechungsstelle, die Durchleitung von Telegrammen einzustellen.

Wenn ein synchroner Datentransfer auf der Kommunikationslinie durch im Übertragungszyklus ausgetauschte zyklische Telegramme erfolgt, so lässt sich durch folgende weitere Verfahrensschritte erfindungsgemäß eine Lokalisierung einer Leitungsunterbrechung erreichen:
- Ermitteln der im letzten Übertragungszyklus durchgeleiteten gültigen Telegramme für jede Slaveeinheit für jede Datenrichtung,
- Mitteilen der jeweiligen ermittelten Anzahl einer Slaveeinheit als Bestandteil eines pro Übertragungszyklus zur Mastereinheit geschickten Telegramms an die Mastereinheit,
- Lokalisieren einer Leitungsunterbrechung anhand der gemeldeten Zahlenwerte aller Slaveeinheiten.

Zur Erkennung eines Ausfalls einer Anzahl von der Mastereinheit an die Slaveeinheiten geschickter zyklischer Telegramme aufgrund einer Leitungsunterbrechung hat sich folgender weitere Verfahrensschritt als vorteilhaft erwiesen:
- Lokalisierung der Leitungsunterbrechung in der Mastereinheit anhand der von den aus Sicht der Mastereinheit in der Linientopologie hinter der gestörten Stelle liegenden Slaveeinheiten gemeldeten Zahlenwerte.

Soll hingegen eine Erkennung eines Ausfalls einer Anzahl zyklischer Telegramme, die von den Slaveeinheiten an die Mastereinheit geschickt wurden, aufgrund einer Leitungsunterbrechung erreicht werden, so empfiehlt sich nach der Erfindung, folgender weitere Verfahrensschritt:
- Lokalisierung der Leitungsunterbrechung in der Mastereinheit anhand der von den aus Sicht der Mastereinheit in der Linientopologie vor der gestörten Stelle liegenden Slaveeinheiten gemeldeten Zahlenwerte.

Für serielle Kommunikationssysteme, die als Mono-Master-System in Linientopologie ausgeführt sind, wird durch die Erfindung die Toleranz gegenüber einem beliebigen Fehler durch Verwendung einer zusätzlichen Rückschlussleitung zum Master erzielt. Diese Verbindung dient im Normalbetrieb nur zu Überwachungszwecken. Sie wird erst bei einer Leitungsunterbrechung aktiviert, um die Kommunikation zu den "abgetrennten" Teilnehmern zu übernehmen. In diesem Fall existieren zwei unabhängige Linien zwischen dem Master zu den Slaves.

Weitere Vorteile und Details zur vorliegenden Erfindung ergeben sich anhand der folgenden Beschreibung eines Ausführungsbeispiels und in Verbindung mit den Figuren. Dabei sind Elemente mit gleicher Funktionalität mit den gleichen Bezugszeichen gekennzeichnet. Es zeigen:
- FIG 1a: ein serielles Kommunikationssystem in Linientopologie mit einem Bussystem,
- FIG 1b: ein serielles Kommunikationssystem in Linientopologie mit als Aneinanderreihung von Punkt-zu-Punkt-Verbindungen,
- FIG 2a: ein serielles Kommunikationssystem nach FIG 1a mit zweitem Bussystem nach dem Stand der Technik,
- FIG 2b: ein serielles Kommunikationssystem nach FIG 1b mit vom Teilnehmer unabhängiger Kommunikationselektronik,
- FIG 3: ein serielles Kommunikationssystem nach der Erfindung mit Rückschlussleitung im Normalbetrieb,
- FIG 4: ein serielles Kommunikationssystem nach der Erfindung mit Rückschlussleitung nach einer Leitungsunterbrechung,
- FIG 5: Anzahl der zyklischen Telegramme im Normalbetrieb für ein serielles Kommunikationssystem nach der Erfindung mit Rückschlussleitung und
- FIG 6: Anzahl der zyklischen Telegramme bei temporärer Leitungsstörung für ein serielles Kommunikationssystem nach der Erfindung mit Rückschlussleitung.

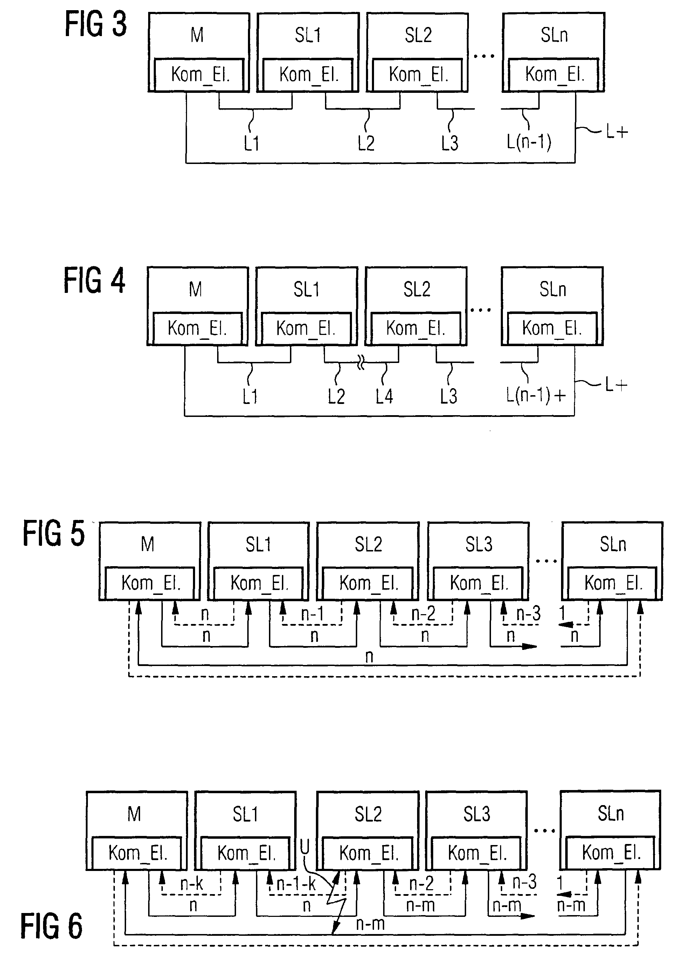

Die FIG 1a, 1b und 2a, 2b stellen den Stand der Technik dar und wurden bereits eingangs näher erläutert. In der Darstellung nach FIG 3 ist nun ein serielles Kommunikationssystem nach der Erfindung mit Rückschlussleitung im Normalbetrieb gezeigt. Die Struktur des Kommunikationsnetzwerks entspricht im wesentlichen der nach FIG 1b, also einem seriellen Kommunikationssystem in Linientopologie mit als Aneinanderreihung von Punkt-zu-Punkt-Verbindungen verbundenen Kommunikationsteilnehmern.

Dabei liegt ein Mono-Master-Netzwerk vor, indem eine Mastereinheit M, in der Regel an einem Linienende angeordnet, und eine Mehrzahl von Slaveeinheiten SL1 bis SLn vorgesehen sind. Dabei ist die Mastereinheit mit der ersten Slaveeinheit SL1 durch eine Kabelverbindung L1, die Slaveeinheit SL1 mit der zweiten Slaveeinheit SL2 über ein weiteres Kabel L2 usw. bis zur letzten Slaveeinheit SLn über ein Kabel L(n-1) verbunden. Jedes Kabel kann zwei Leitungen für eine bidirektionale Voll-Duplex-Verbindung enthalten, wobei von der Mastereinheit M Sollwerte an die Slaveeinheiten SL 1 bis SLn übertragen werden und die Slaveeinheiten SL1 bis SLn jeweilige Istwerte in Richtung der Masterenheit M liefern. Die Kommunikation zwischen den einzelnen Teilnehmern erfolgt dabei insbesondere mit Hilfe von Telegrammen T, die über das Kommunikationsnetzwerk ausgetauscht werden.

Erfindungsgemäß ist nun eine Rückschlussleitung L+ von der letzten Slaveeinheit SLn zurück zur Mastereinheit M geführt. Sollte die Mastereinheit M nicht an einem Linienende angeordnet sein, so wird die Rückschlussleitung L+ zwischen den beiden die Linienendteilnehmer darstellenden Slaveeinheiten vorgenommen. Die entstehende Ringtopologie ist in beiden Fällen identisch, so dass das Funktionsprinzip in beiden Fällen verwendbar ist. Im folgenden wird jedoch von der üblichen Topologie mit der Mastereinheit M an einem Linienende ausgegangen.

Die Darstellung nach FIG 4 zeigt nun ein serielles Kommunikationssystem nach der Erfindung mit Rückschlussleitung, wie in FIG 3 beschrieben, nach einer Leitungsunterbrechung U. Hier tritt die Leitungsunterbrechung U beispielhaft zwischen den Slaveeinheiten SL2 und SL 3 auf. Demnach ist die Leitung L2 unterbrochen.

Um eine Kommunikation zwischen allen Teilnehmern M, SL1...SLn aufrecht zu erhalten, wird nun die Rückschlussleitung L+ aktiviert. Aus Sicht der Mastereinheit M wird nun über zwei Linien kommuniziert, einmal über die bisherige Linientopologie mit Leitung L1 zur Slaveeinheit SL1 und darüber hinaus über die Rückschlussleitung L+ als zweite Kommunikationslinie. Über die zweite Kommunikationslinie sind dann auch weiter alle Slaveeinheiten, die hinter der Leitungsunterbrechung U angeordnet sind, erreichbar über die nunmehr der zweiten Linie L+ zugeordneten Kabel bzw. Leitungen L(n-1)+ bis L3+. Letzterer Zusammenhang wird dadurch verdeutlicht, dass diese Leitungen nun ebenfalls mit einem ,+' gekennzeichnet sind.

Der entscheidende Vorteil der Erfindung liegt im minimalen Hardware-Aufwand, da lediglich ein einziges Kabel L+ zusätzlich erforderlich ist, um alle oben genannten Schwierigkeiten zu bewältigen. Die übrige Funktionalität wird im Bereich der Kommunikationselektronik der Slaves bzw. in der Software des Master bereitgestellt, was im folgenden näher erläutert wird.

Durch Hinzufügen einer Rückschlussleitung zur Mastereinheit M können Mono-Master-Systeme in Linientopologie nach FIG 3 und FIG 4 absolut tolerant gegenüber Leitungsunterbrechungen U gemacht werden. Voraussetzung ist ein Verfahren, das eine zuverlässige und schnelle Detektierung einer Unterbrechung U - auch wenn diese nur sporadisch auftritt - und eine schnelle Aktivierung der Rückschlussleitung L+ ermöglicht.

Der Ablauf bei Eintreten einer Störung sieht wie folgt aus:
1. Lokalisieren der evtl. sporadischen Störung U
2. Herstellen einer dauerhaften Unterbrechung, um die Unabhängigkeit der zwei Kommunikationslinien zu gewährleisten.

Dazu sendet der Master an den letzten Teilnehmer vor der gestörten Verbindung, hier die Slaveeinheit SL1, den Befehl, die Durchleitung von Telegrammen einzustellen.
3. Aktivieren der zweiten Kommunikationslinie L+, L(n-1)+...L3+.

Dazu werden die abgetrennten Teilnehmer informiert, dass die Mastereinheit M nunmehr nur über die zweite Linie mit der Rückschlussleitung L+ zu erreichen ist. Danach kann die Aufnahme des Datenverkehrs auf der zweiten Linie erfolgen.

Nach Beseitigen der Störung U ist der Normalbetrieb wie folgt wieder aufzunehmen:
1. Benachrichtigen der Teilnehmer an der zweiten Kommunikationslinie L+, L(n-1)+...L3+, dass die Kommunikation wieder auf die ursprüngliche erste Kommunikationslinie L1...L(n-1) umgeschaltet wird
2. Unterbrechung U beseitigen

Dazu ergeht ein Befehl der Mastereinheit M an den letzten Teilnehmer vor der ehemals gestörten Verbindung, hier an die Slaveeinheit SL1, die Durchleitung von Telegrammen T wieder aufzunehmen.
3. Eine eventuell implementierte Überwachungsfunktion über die Rückschlussleitung L+ wieder aktivieren

Ein solches Verfahren ist im folgenden für den Fall einer taktsynchronen Kommunikation ausgeführt. Als wesentliche Anforderung der dortigen Anwendung ist zu nennen, dass zwischen Auftreten einer (evtl. sporadischen) Leitungsstörung U und der Aktivierung der zweiten Kommunikationslinie, d. h. der ungestörten Fortsetzung der Kommunikation zu allen Teilnehmern, weniger als zwei Buszyklen verstreichen dürfen.

Die mit Abstand schwierigste Aufgabe liegt in der sicheren Lokalisierung einer nur sporadischen Störung U, die unter Umständen lediglich den Verlust eines einzigen Telegramms T zur Folge hat. Die Lösung gemäß der vorliegenden Erfindung sieht dafür wie folgt aus:

Die Slaveeinheiten werden jeweils mit zwei Zählern ausgerüstet, um getrennt für beide Datenrichtungen der Voll-Duplex-Verbindung die Zahl der im letzten Übertragungszyklus durchgeleiteten gültigen zyklischen Telegramme zu ermitteln.

Die ohnehin einmal pro Übertragungszyklus von den Slaveeinheiten SL1 bis SLn zur Mastereinheit M geschickten Telegramme werden bei der beschriebenen Redundanzoption um die Zählerstände erweitert.

Die Aufgabe einer Steuerung der Mastereinheit M, z.B. in Form einer Software, ist es nun, aus den Zählerständen sämtlicher Slaveeinheiten SL1 bis SLn die gestörte Verbindung zu ermitteln. Die erfindungsgemäße Lösung dieses Problems basiert im wesentlichen auf der Erkenntnis, dass alle Slaveeinheiten SL1 bis SLn in "Sollwertrichtung" die gleiche Anzahl n von Telegrammen durchleiten müssen, während in "Istwertrichtung" die Zahl der durchzuleitenden Telegramme von Slaveeinheit zu Slaveeinheit in Richtung der Mastereinheit M jeweils um eins zunimmt. Dieser Zusammenhang ist in der Darstellung nach FIG 5 gezeigt, indem jedes Kabel L1 bis L(n-1) und L+, wie voranstehend geschildert, zwei Leitungen beinhaltet. Eine dient der Kommunikation in "Sollwertrichtung" (durchgezogene Linie), die andere Leitung der Kommunikation in "Istwertrichtung" (gestrichelte Linie).

Der Zahl der vorhandenen Slaveeinheiten SL entsprechend, werden von der Mastereinheit M die Anzahl von n Telegrammen in "Sollwertrichtung" an die Slaveeinheiten SL1 bis SLn geschickt. Jede Slaveeinheit SL1 bis SLn muss jedes dieser n Telegramme durchleiten. Anders ist der Fall in "Istwertrichtung" gelagert, wo jede Slaveeinheit ein Telegramm an die Mastereinheit M sendet. Während die am weitesten von der Mastereinheit M entfernte Slaveeinheit SLn kein Telegramm durchleiten muss, muss die in "Istwertrichtung" gesehen letzte Slaveeinheit SL1 die Telegramme der "davor" liegenden Slaveeinheiten SL2 bis SLn durchleiten, also n-1 Telegramme.

Fallen beispielsweise durch eine sporadische Unterbrechung U einer Leitung m zyklische Telegramme von der Mastereinheit M in Sollwertrichtung zwischen der ersten Slaveeinheit SL1 und der zweiten Slaveeinheit SL2 aus, melden alle hinter der gestörten Stelle U liegenden Teilnehmer SL2 bis SLn im nächsten Zyklus entsprechend weniger in Sollwertrichtung durchgeleitete Telegramme (n-m). Dieser Zusammenhang ist anhand der Darstellung nach FIG 6 veranschaulicht, die die Anzahl der zyklischen Telegramme bei temporärer Leitungsstörung zwischen der ersten Slaveeinheit SL1 und der zweiten Slaveeinheit SL2 für ein serielles Kommunikationssystem nach der Erfindung mit Rückschlussleitung L+ zeigt.

Betrifft die Störung die Istwertrichtung mit dem Ausfall von k der von den Slaveeinheiten SL2 bis SLn an die Mastereinheit M geschickten Telegrammen, so kann dies aus der Telegrammzahl, die die Teilnehmer - hier Slaveeinheit SL1 - vor der gestörten Stelle U melden, ermittelt werden.

Die der Darstellung nach FIG 6 zugrunde liegende Situation veranschaulicht diese Zusammenhänge für die Annahme, dass an der gestörten Stelle U wegen einer sporadischen Leitungsstörung in Sollwertrichtung m und in Istwertrichtung k zyklische Telegramme ausfallen.

## Patentansprüche

1. Serielles Kommunikationssystem mit einer Mastereinheit (M) und einer Mehrzahl von Slaveeinheiten (SL1...SLn), die untereinander als Aneinanderreihung von Punkt-zu-Punkt-Verbindungen in Linientopologie (L1...L(n-1)) verbunden sind, **dadurch gekennzeichnet, dass** eine zusätzliche Verbindung (L+) zwischen den beiden Linien-Endteilnehmern (M, SLn) vorgesehen ist, insbesondere von der in der Linie (L1...L(n-1)) am weitesten von der Mastereinheit (M) entfernten Slaveeinheit (SL1...SLn) zur Mastereinheit (M), die bei einer Leitungsunterbrechung (U) in der Linientopologie (L1...L(n-1)) der Übernahme der Kommunikation zu den abgetrennten Slaveeinheiten (SL1...SLn) dient.

2. Serielles Kommunikationssystem nach Anspruch 1, **dadurch gekennzeichnet, dass** die zusätzliche Verbindung (L+) erst im Fall einer Leitungsunterbrechung (U) in der Linientopologie (L1...L(n-1)) aktivierbar ist.

3. Serielles Kommunikationssystem nach Anspruch 1 oder 2, **dadurch gekennzeichnet, dass** die zusätzliche Verbindung (L+) im Normalbetrieb zu Überwachungszwecken dient.

4. Serielles Kommunikationssystem nach Anspruch 2 oder 3, **dadurch gekennzeichnet, dass** ein Mittel zur Detektion einer Leitungsunterbrechung (U), insbesondere auch einer sporadischen Unterbrechung, in der Linientopologie (L1...L(n-1)) vorgesehen ist, durch das die zusätzliche Verbindung (L+) aktivierbar ist.

5. Serielles Kommunikationssystem nach Anspruch 4, **dadurch gekennzeichnet, dass** das Mittel zur Detektion in der Mastereinheit (M) angeordnet ist.

6. Serielles Kommunikationssystem nach Anspruch 4 oder 5, wobei ein synchroner Datentransfer auf der Kommunikationslinie (L1...L(n-1)) durch im Übertragungszyklus ausgetauschte zyklische Telegramme (n) erfolgt, **dadurch gekennzeichnet, dass** jede Slaveeinheit (SL1...SLn) für jede Datenrichtung über einen Zähler zur Ermittlung der im letzten Übertragungszyklus durchgeleiteten gültigen Telegramme (n) verfügt, wobei ein jeweiliger Zählerstand einer Slaveeinheit (SL1...SLn) von dieser als Bestandteil eines pro Übertragungszyklus zur Mastereinheit (M) geschickten Telegramms (T) der Mastereinheit (M) mitteilbar ist, in der anhand der Zählerstände aller Slaveeinheiten (SL1...SLn) eine Leitungsunterbrechung (U) lokalisierbar ist.

7. Serielles synchrones Kommunikationssystem nach Anspruch 6, mit Erkennung eines Ausfalls einer Anzahl (m) von der Mastereinheit (M) an die Slaveeinheiten (SL1...SLn) geschickter zyklischer Telegramme (n) aufgrund einer Leitungsunterbrechung (U), **dadurch gekennzeichnet, dass** in der Mastereinheit (M) die Leitungsunterbrechung (U) anhand der von den aus Sicht der Mastereinheit (M) in der Linientopologie (L1...L(n-1)) hinter der gestörten Stelle (U) liegenden Slaveeinheiten (SL1...SLn) gemeldeten Zählerstände lokalisierbar ist.

8. Serielles synchrones Kommunikationssystem nach Anspruch 6 oder 7, mit Erkennung eines Ausfalls einer Anzahl (k) von zyklischen Telegrammen (n), die von den Slaveeinheiten (SL1...SLn) an die Mastereinheit (M) geschickt wurden, aufgrund einer Leitungsunterbrechung (U), **dadurch gekennzeichnet, dass** in der Mastereinheit (M) die Leitungsunterbrechung (U) anhand der von den aus Sicht der Mastereinheit (M) in der Linientopologie (L1...L(n-1)) vor der gestörten Stelle (U) liegenden Slaveeinheiten (SL1...SLn) gemeldeten Zählerstände lokalisierbar ist.

9. Serielles Kommunikationssystem nach einem der Ansprüche 5 bis 8, **dadurch gekennzeichnet, dass** das Mittel zur Detektion in der Mastereinheit (M) als ein geeignet programmierter Mikroprozessor ausgeprägt ist.

10. Verfahren zur Erzeugung einer Verbindungs-Redundanz (L+) für ein serielles Kommunikationssystem mit einer Mastereinheit (M) und einer Mehrzahl von Slaveeinheiten (SL1...SLn), die untereinander als Aneinanderreihung von Punkt-zu-Punkt-Verbindungen in Linientopologie (L1...L(n-1)) verbunden sind, **gekennzeichnet durch** folgende Verfahrensschritte:
- Herstellen einer zusätzlichen Verbindung (L+) zwischen den beiden Linien-Endteilnehmern (M, SLn), insbesondere von der in der Linie (L1...L(n-1)) am weitesten von der Mastereinheit (M) entfernten Slaveeinheit zur Mastereinheit (M), zur
- Übernahme der Kommunikation zu den abgetrennten Slaveeinheiten bei einer Leitungsunterbrechung (U) in der Linientopologie (L1...L(n-1)).

11. Verfahren zur Erzeugung einer Verbindungs-Redundanz (L+) für ein serielles Kommunikationssystem nach Anspruch 10, **gekennzeichnet durch** folgende weitere Verfahrensschritte:
- Aktivieren der Kommunikation zu den abgetrennten Slaveeinheiten über die zusätzliche Verbindung (L+) im Fall einer Leitungsunterbrechung (U) in der Linientopologie (L1...L(n-1)) und
- Informieren der abgetrennten Slaveeinheiten über die zusätzliche Verbindung (L+), dass die Mastereinheit (M) nur über die zusätzliche Verbindung (L+, L3+, L(n-1)+) erreichbar ist.

12. Verfahren zur Erzeugung einer Verbindungs-Redundanz (L+) für ein serielles Kommunikationssystem nach Anspruch 10 oder 11, wobei eine intermittierende Leistungsunterbrechung (U) auftritt, **gekennzeichnet durch** folgende weitere Verfahrensschritte:
- Lokalisieren der Unterbrechungsstelle (U),
- Herstellen einer dauerhaften Unterbrechung (U) **durch** Mitteilung an die letzte Slaveeinheit vor der Unterbrechungsstelle (U), die Durchleitung von Telegrammen (T) einzustellen.

13. Verfahren zur Erzeugung einer Verbindungs-Redundanz (L+) für ein serielles Kommunikationssystem nach einem der Ansprüche 10 bis 12, wobei ein synchroner Datentransfer auf der Kommunikationslinie (L1...L(n-1)) durch im Übertragungszyklus ausgetauschte zyklische Telegramme (n) erfolgt, **gekennzeichnet durch** folgende weitere Verfahrensschritte zur Lokalisierung einer Leitungsunterbrechung (U):
- Ermitteln der im letzten Übertragungszyklus durchgeleiteten gültigen Telegramme (n) für jede Slaveeinheit (SL1...SLn) für jede Datenrichtung,
- Mitteilen der jeweiligen ermittelten Anzahl einer Slaveeinheit (SL1...SLn) als Bestandteil eines pro Übertragungszyklus zur Mastereinheit (M) geschickten Telegramms (T) an die Mastereinheit (M),
- Lokalisieren einer Leitungsunterbrechung (U) anhand der gemeldeten Zahlenwerte aller Slaveeinheiten (SL1...SLn).

14. Verfahren zur Erzeugung einer Verbindungs-Redundanz (L+) für ein serielles Kommunikationssystem nach Anspruch 13, mit Erkennung eines Ausfalls einer Anzahl (m) von der Mastereinheit (M) an die Slaveeinheiten (SL1...SLn) geschickter zyklischer Telegramme (n) aufgrund einer Leitungsunterbrechung (U), **gekennzeichnet durch** folgenden weiteren Verfahrensschritt:
- Lokalisierung der Leitungsunterbrechung (U) in der Mastereinheit (M) anhand der von den aus Sicht der Mastereinheit (M) in der Linientopologie (L1...L(n-1)) hinter der gestörten Stelle (U) liegenden Slaveeinheiten gemeldeten Zahlenwerte.

15. Verfahren zur Erzeugung einer Verbindungs-Redundanz (L+) für ein serielles Kommunikationssystem nach Anspruch 13 oder 14, mit Erkennung eines Ausfalls einer Anzahl (k) von zyklischen Telegrammen (n), die von den Slaveeinheiten (SL1...SLn) an die Mastereinheit (M) geschickt wurden, aufgrund einer Leitungsunterbrechung (U), **gekennzeichnet durch** folgenden weiteren Verfahrensschritt:
- Lokalisierung der Leitungsunterbrechung (U) in der Mastereinheit (M) anhand der von den aus Sicht der Mastereinheit (M) in der Linientopologie (L1...L(n-1)) vor der gestörten Stelle (U) liegenden Slaveeinheiten (SL1...SLn) gemeldeten Zahlenwerte.
